# NEUE EUROPÄISCHE PATENTSCHRIFT

(11) **EP 0 747 582 B2**
(45) Veröffentlichungstag und Bekanntmachung des Hinweises auf die Entscheidung über den Einspruch: **27.08.2003**
(45) Hinweis auf die Patenterteilung: 15.07.1998
(21) Anmeldenummer: 96108162.7
(22) Anmeldetag: 22.05.1996
(51) Int. Cl.: F01N 7/08, F01N 7/18, F16L 27/111

(54) **Entkopplungselement für Schwingungen in Rohrleitungen**
Decoupling element for vibrations in pipes
Elément de découplage pour les vibrations dans les conduits

(30) Priorität: 08.06.1995 DE 29509434 U
(43) Veröffentlichungstag der Anmeldung: 11.12.1996
(73) Patentinhaber: Burgmann Dichtungswerke GmbH & Co. KG, 82515 Wolfratshausen (DE)
(72) Erfinder: Kuhn, Rainer, 87656 Germaringen (DE)
(74) Vertreter: Schmidt, Horst, Dr.

(56) Entgegenhaltungen:
- EP-A- 0 208 128
- EP-A- 0 432 436
- EP-A- 0 717 225
- DE-A- 3 321 382
- DE-A- 4 401 827
- DE-C- 4 317 334
- FR-A- 2 701 753
- GB-A- 1 473 183
- IT-U- 0 217 152
- US-A- 3 369 829

## Beschreibung

Die Erfindung betrifft ein Entkopplungselement für Schwingungen in Rohrleitungen, insbesondere zum Einbau in Abgasanlagen von Brennkraftmaschinen.

Ein bekanntes Entkopplungselement (DE-A-44 01 827) umfasst ein Gehäuse aus zwei durch ein umgelegtes, über den äusseren Umfang des Gehäuses radial vorstehendes Seilelement miteinander verbundenen Gehäusehälften. Das Gehäuse ist endseitig starr, z.B. durch Schweissen, mit den Rohranschlusstücken des flexiblen Balgverbindungselementes verbunden. Die axiale bzw. winkelmässige Nachgiebigkeit des Gehäuses wird dadurch erzielt, dass den Balg aussenumfänglich umgebende Bereiche der Gehäusehälften als wechselseitig axial ineinander nach Art einer Verzahnung eingreifende breite Vorsprünge mit federnder Eigenschaft ausgebildet sind, wobei das umgelegte Seilelement die federnde Eigenschaft unterstützt. Bei einer bekannten Abwandlung dieser Bauart (FR-A-2 701 753) sind die Vorsprünge als schmale Arme ausgebildet, die in grossdimensionierte, durch benachbarte Vorsprünge umfänglich begrenzte Ausnehmungen in der jeweiligen gegenüberliegenden Gehäusehälfte eingreifen. Gemeinsames Merkmal von beiden vorgenannten Bauarten von Entkopplungselementen ist eine zentrale axiale Lage der Trennstelle der Gehäusehälften bzw. der Gelenkstelle im Bereich des Balges. Bekannt ist es ferner (EP-A-0 432 436), eine das Balgverbindungselement umgreifende Schraubenfeder vorzusehen, die sich zwischen steifen Anschlussendstücken erstreckt, die mit den betreffenden Rohranschlusstücken verpresst sind. Anstelle einer Schraubenfeder kann auch ein Drahtgeflechtschlauch vorgesehen sein. Schliesslich ist ein Entkopplungselement (EP-A-0 615 595) bekannt, bei dem die Endteile eines zweiteiligen Gehäuses mit den jeweiligen Rohranschlusstücken verschweisst und durch eine das Balgverbindungselement umgebende Schraubenfeder zu einer permanenten Anordnung verbunden sind. Gemeinsam ist den bekannten Lösungen, dass diese nicht geeignet sind, ein Entkopplungselement mit rohrförmiger, im wesentlicher glatt-zylindrischer äusserer Konfiguration zu schaffen, wie es aus Montage-, Lager- und Platzbedarfsgründen grundsätzlich gewünscht wird. Ausserdem haben die bekannten Entkopplungsetemente aufgrund der Mehrteiligkeit des Gehäuses und der die axiale und winkelmässige Nachgiebigkeit schaffenden Massnahmen einen komplizierten Aufbau, so dass ein hoher Fertigungsaufwand mit entsprechenden Kosten erforderlich ist. Ein weiterer Nachteil der bekannten Entkopplungselemente ist, dass diese in der Regel ein hohes Gewicht haben und zusammen mit dem benötigten erhöhten Platzbedarf bei Anordnung in Abgasanlagen von Brennkraftmaschinen dem Trend in der Automobilbranche entgegenwirken, kompaktere, leichtere Triebwerke zu schaffen. In Anbetracht der ungünstigen Konfiguration der Gehäuse der vorbeschriebenen bekannten Entkopplungselemente wurde ferner schon vorgeschlagen (US-A-3 369 829), die nachgiebige Verbindung zwischen Gehäuse und Rohranschlusstücken auf die Gehäusestirnenden zu verlagern, so dass das Gehäuse grundsätzlich ohne vorstehende Teile ausgebildet werden kann. Als federndes Verbindungsglied ist an jedem Gehäusestirnende eine konische Schraubenfeder in Wechselbeziehung mit geteilten Rohranschlusstücken und einem geteilten Balgverbindungselement vorgesehen. Diese Anordnung ist demzufolge mit einem erheblichen baulichen Aufwand verbunden und zudem in ihrer Fuiddichtigkeit fraglich. Eine in dieser Hinsicht verbesserte Anordnung mit integral mit den Rohranschlusstücken verbundenem und damit fluiddichtem Balgverbindungselement (US-A-5 299 837) sieht eine Vielzahl on ringförmigen Elementen aus Drahtseil vor, die längs des Umfangs eines Rohrverbindungsstückes verteilt nahe einem Stirnende des Gehäuses angeordnet sind. Nachteil dieser Anordnung ist, dass für die Unterbringung der Federelemente ein erhöhter Platzbedarf zwischen Gehäuse und Rohranschlusstück besteht, so dass derartige Entkopplungselemente kaum geringere bauliche Abmessungen haben als solche mit geteiltem Gehäuse und die Gehäusehälften miteinander verbindender Schraubenfeder. Bei beiden vorbeschriebenen Entkopplungselementen ist ferner die endseitige federnde Anbindung grundsätzlich torsionsweich, was unerwünscht ist, da dadurch das Balgverbindungselement nicht gegen Torsionsbelastungen geschützt werden kann, für die es besonders empfindlich ist.

Der Erfindung liegt die Aufgabe zugrunde, ein Entkopplungselement der eingangs erwähnten Gattung zu schaffen, mit dem ein oder mehrere der vorerwähnten Nachteile bekannter Entkopplungselemente vermieden werden. Insbesondere soll durch die Erfindung ein im wesentlichen torsionssteifes Entkopplungselement mit minimalen baulichen Abmessungen geschaffen werden, das ohne weiteres in glatt-zylindrischer, z.B. rohrförmiger Konfiguration ausgebildet und mit vergleichsweise wenigen Fertigungsschritten in Grosserie gefertigt werden kann. Weitere Ziele der Erfindung sind: Schaffung eines Entkopplungselementes der vorgenannten Art mit Überlastschutz durch progressive Federkennlinie bei Zug- und Druckbeanspruchung; laterale Auslenkungssteifigkeit trotz möglichen Ausgleichs von Einbautoleranzen: geeignete Biegeweichheit, die Motornickbewegungen Rechnung tragen kann.

Das erfindungsgemässe Entkopplungselement zeichnet durch die Merkmale des Patentanspruches 1 aus. Das Gehäuse ist danach in an sich bekannter Weise im Bereich wenigstens eines seiner axialen Enden, vorzugsweise jedoch beider Enden, mit dem benachbarten Rohranschlusstück nicht starr, sondern über eine Gelenkfederanordnung verbunden, die dem Entkopplungselement die axiale und winkelmässige Nachgiebigkeit verleiht. In besonders vorteilhafter Ausgestaltung der Erfindung kann das Gehäuse daher einstückig, steif und glatt-zylindrisch ohne aussenumfänglich vorstehende Teile ausgebildet sein, da die die Nachgiebigkeit schaffenden Massnahmen in den Bereich der Stirnenden des Entkopplungselementes verlagert sind. Jedes Federelement der Gelenkfederanordnung stellt ein im wesentlichen konzentrisch zum betreffenden Rohranschlusstück angeordnetes kontinuierliches Ringelement dar, das umfänglich abwechselnd mit dem Gehäuse bzw. dem Rohranschlusstück verbunden ist, wobei die Anbindungsstellen umfänglich versetzt zueinander liegen. Die zwischenliegenden Bereiche zwischen den Anbindungsstellen schaffen die gewünschte federnde Nachgiebigkeit, ohne dass hierfür ein erhöhter Platzbedarf erforderlich ist. Gleichzeitig erleichtert die Anordnung der Federelemente die Fertigung und Montage des Entkopplungselementes, wobei die Federelemente aufgrund ihrer Struktur mit geringem fertigungstechnischen Aufwand, wenn erwünscht, ohne weiteres in eigenen Betriebsstätten hergestellt werden können. Die Gelenkfederanordnung kann femer leicht an die auftretenden Belastungen und gewünschten Spezifikationen angepasst werden, indem z.B. mehrere konzentrische Ringfederelemente vorgesehen werden.

Gemäss einer Weiterbildung der Erfindung können die Ringfederetemente in vorteilhafter Weise als Scheibenfederelemente ausgebildet sein. Derartige Scheibenfederelemente sind grundsätzlich torsionssteif und daher geeignet, das balgartige Verbindungselement vor schädigenden Torsionsbeanspruchungen wirksam zu schützen. Andererseits kann eine solche Gelenkfederanordnung eine gute Biegenachgiebigkeit haben. Besonders vorteilhaft ist dabei die grundsätzlich progressive Federkennlinie von Scheibenfederelementen. D.h. die Auslegung der Gelenkfederanordnung kann so sein, dass im normalen Betriebsbereich eine gewünschte Biegeweichheit vorliegt, während mit zunehmender Auslenkung aufgrund der progressiven Federkennlinie die Gelenkfederanordnung steifer wird, was bei hohen Beanspruchungen das Fernbleiben von schädlichen Verformungen gewährleistet und ausserdem Vorteile hinsichtlich des Schwingverhaltens des Entkopplungselementes bietet, da eine geringe Resonanzgefahr besteht. Es können mehrere Scheibenfederelemente zu einem Federpaket zusammengefasst werden, was eine gute schwingungsdämpfende Wirkung aufgrund der Reibung zwischen den einzelnen Scheibenfederelementen schafft. Dies ermöglicht es, dass ggf. auf zusätzliche Massnahmen zur Dämpfung der Schwingungen in Gestalt von Dämpfungseinlagen verzichtet werden kann.

Die Übertragung der Kräfte zwischen den Rohranschlusstücken und dem Gehäuse erfolgt vorteilhafterweise über Dreipunktverbindungen, so dass die Kraftresultierende auf der Mittellängsachse des Entkopplungselementes liegt und kein Biegemoment hervorruft. Eine mit einem erfindungsgemässen Entkopplungselement ausgestattete Abgasanlage ist daher zuverlässig abgestützt.

Da erfindungsgemäss das Gehäuse eine aussenumfänglich glatte geschlossene Ausbildung haben kann, werden die darin aufgenommenen Teile, wie das balgartige Verbindungselement sowie gegebenenfalls ein darauf angeordnetes zusätzliches Dämpfungselement wirksam gegen äussere Umgebungseinflüsse geschützt. Wenn erwünscht, kann die Gehäuseanordnung endseitig offen sein, so dass die darin aufgenommenen Teile wirksam durchlüftet werden, was einen Schutz vor Korrosion bietet.

Die Gehäuseanordnung kann auch ohne wesentliche Einbusse an Steifigkeit in Leichtbauweise ausgebildet sein, indem darin z.B. grossflächige Durchbrechungen vorgesehen werden.

Gemäss einer anderen vorteilhaften, fertigungsgünstigen Weiterbildung der Erfindung kann das Federelement auch als konzentrisch zum betreffenden Rohranschlusstück angeordnetes Ringelement aus einem Drahtseilmaterial gebildet sein. Ein solches Federelement kann problemlos innerhalb des Gehäuses vorgesehen werden, was Abmessungen des Entkopplungselementes ermöglicht, die sich nicht wesentlich von sog. Flex-Schläuchen unterscheiden, wie sie in Abgasanlagen häufig verwendet werden. Die Federkennlinie einer derartigen Gelenkfederanordnung ist bei Zug- und Druckbeanspruchungen im wesentlichen symmetrisch, jedoch progressiv, was bei gutem Schwingungsentkopplungsverhalten unter normalen Betriebsbedingungen gleichzeitig einen wirksamen Schutz gegen Überlastung bedeutet. Ausserdem ist die Gelenkfederanordnung dieser Alternativen der Erfindung ebenfalls torsionssteif: sie schützt daher das Balgverbindungselement vor schädlichen Torsionsbeanspruchnungen. Drahtseilfederelemente können fertigungsgünstig vorgefertigt und als Einheit montiert werden. Ferner kann vorgesehen werden, dass die Gelenkfederanordnung durch einen radialen Bereich des Gehäuses nach aussen abgeschirmt ist. Dadurch wird eine wirksame axiale Wegbegrenzung geschaffen, die das Balgverbindungselement und das Darhtseilfederelement gegen übermässige Auslenkungen bei der Montage oder während des Transportes schützt. Gleichzeitig werden die Teile im Inneren des Gehäuses vor Beschädigungen, z.B. Steinschlag, geschützt und wird das akustische Verhalten des Entkopplungslementes gegenüber einer Anordnung mit endseitig offenem Gehäuse verbessert.

Die Erfindung wird nachfolgend anhand von Ausführungsformen und der Zeichnung näher erläutert. Es zeigen:
Fig. 1-4 Ausführungsformen von Entkopplungslementen nach der Erfindung mit Gelenkfederanordnungen auf Basis von Scheibenfederelementen, wobei
   Fig. 1 in teilweise längsgeschnittener Ansicht ein Scheibenfeder-Entkopplungselement gemäss einer ersten Ausführungsform der Erfindung zeigt,
   Fig. 2 das Scheibenfeder-Entkopplungselement nach Fig. 1 in Seitenansicht zeigt,
   Fig. 3 in teilweise fragmentarischer Ansicht ein Scheibenfeder-Entkopplungselement gemäss einer zweiten Ausführungsform der Erfindung zeigt,
   Fig. 4 in einer Ansicht ähnlich Fig. 1 ein Scheibenfeder-Entkopplungselement gemäss einer dritten Ausführungsform der Erfindung zeigt, und
Fig. 5-6 eine Ausführungsform eines Entkopplungselementes nach der Erfindung mit einer Gelenkfederanordnung auf Basis eines ringförmigen Federelementes aus einem Drahtseilmaterial, wobei

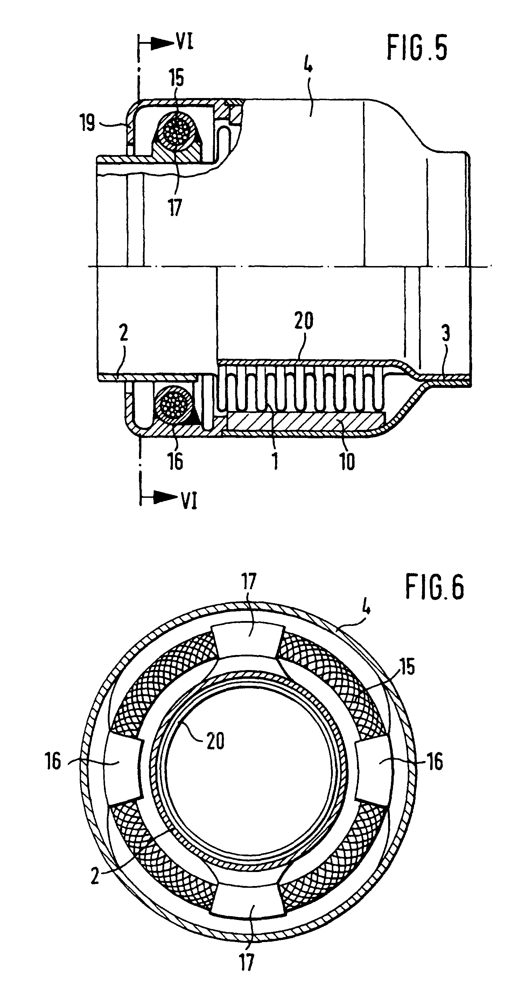

Fig. 5 ein Ringfeder-Entkopplungselement in fragmentarisch längsgeschnittener Ansicht zeigt, und
Fig. 6 das Ringfeder-Entkopplungselement nach Fig. 5 in einer Ansicht längs der Schnittlinie VI-VI zeigt.

In der Zeichnung tragen gleiche oder ähnliche Bauteile die gleichen Bezugszeichen.

Gemeinsames Merkmal der Entkopplungselemente nach der Erfindung ist ein balgartig gewelltes durchgehendes Verbindungselement 1 aus einem geeigneten Material wie Metall, an dessen axialen Enden jeweils ein zylindrisches Rohranschlusstück 2, 3 ausgebildet ist. Die Rohranschlusstücke 2, 3 können integraler Teil des Verbindungselementes 1 sein oder daran z. B. durch Schweissen befestigt sein. Sie dienen zur Verbindung des Entkopplungselementes mit bei A und B durch gestrichelte Linien angedeuteten Enden von Rohren, z. B. der Abgasleitung einer Brennkraftmaschine.

In einem radialen Abstand zum balgartig gewellten Verbindungselement 1 ist konzentrisch zu dessen Mittellängsachse ein Gehäuse 4 angeordnet, welches das Verbindungselement 1 aussen umgibt und mit seinen axialen Endbereichen über die axialen Enden des Verbindungselementes 1 beidseitig etwas hinausragen kann. Das Gehäuse 4 kann die Form eines steifen, kreiszylindrischen, aussen glatten Rohrabschnittes haben. Die Erfindung ist jedoch auf eine derartige Konfiguration des Gehäuses 4 nicht beschränkt, worauf später noch näher eingegangen wird.

Zur Erzielung einer verbesserten schwingungsdämpfenden Wirkung des Entlopplungselementes kann eine Dämpfungseinlage 10 in Gestalt eines mit dem Verbindungselement 1 aussenumfänglich in Berührung stehenden Metalldrahtgestrickes im Raum zwischen dem Verbindungselement 1 und dem Gehäuse 4 vorgesehen sein.

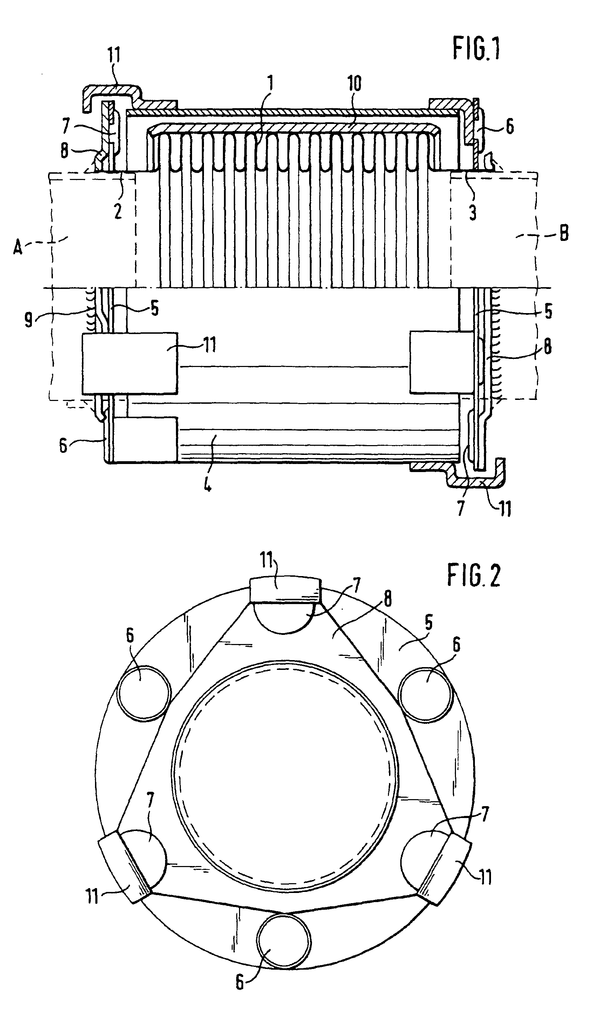

Nachfolgend wird auf Fig. 1 und 2 Bezug genommen, die eine Gelenkfederanordnung in Gestalt eines ringförmigen, in einer im wesentlichen radialen Ebene liegenden Scheibenfederelementes 5 nahe jedem axialen Ende des Gehäuses 4 zeigen, das konzentrisch zur Mittellängsachse des Balgverbindungselements 1 vorgesehen ist. An drei umfänglich in gleichem Winkelabstand voneinander angeordneten Stellen oder Punkten 6 ist das Scheibenfederelement 5 mit dem Gehäuse 4, z.B. über daran befestigte Winkelstücke, sowie an drei ebenfalls in gleichem Winkelabstand voneinander vorgesehenen Stellen oder Punkten 7 mit einer Halterung 8 fest verbunden. Die Halterung 8 kann, wie bei 9 angedeutet ist, mit dem betreffenden Rohranschlusstück 2 bzw. 3 zusammen mit dem zugehörigen Ende des Rohres A bzw. B verschweisst oder in anderer Weise fest verbunden sein. Die umfänglichen Lagen der halterungsseitigen Verbindungsstellen 7 bzw. der gehäuseseitigen Verbindungsstellen 6 sind zueinander versetzt, so dass jeweils ein gehäuseseitiger Verbindungspunkt 6 zwischen einem Paar halterungsseitiger Verbindungspunkte 7 zu liegen kommt. Infolge davon verbleiben zwischen benachbarten gehäuse- und halterungsseitigen Verbindungsstellen 6, 7 freie Abschnitte des Scheibenfederelementes 5, die eine begrenzte axiale und winkelmässige Relativbewegung zwischen dem betreffenden Rohranschlusstück 2 bzw. 3 und dem Gehäuse 4 nach Art eines Gelenkes ermöglichen. Ausserdem wirken die Gelenkfederanordnungen an beiden axialen Enden des Gehäuses 4 zusammen, um zusätzlich eine radiale Versetzung der Mittellängsachsen der Rohranschlusstücke 2, 3 zu ermöglichen.

Für die gehäuse- und halterungsseitigen Verbindungsstellen 6, 7 sind bei der gezeigten Ausführungsform der Erfindung Nieten vorgesehen. Es versteht sich, dass auch andere geeignete Verbindungstechniken angewandt werden können, z.B. Punktschweissen, Punktkleben, oder Klemm- oder Schraubverbindungen. Ferner ist die Anzahl der jeweiligen gehäuse- bzw. halterungsseitigen Verbindungsstellen 6, 7 nicht auf die Zahl drei beschränkt. Vielmehr könnten auch mehr oder weniger derartige Verbindungsstellen vorgesehen sein, wobei mit zunehmender Anzahl an Verbindungsstellen der Widerstand, den das Scheibenfederelement 5 einer axialen oder winkelmässigen Relativbewegung zwischen dem Gehäuse 4 und den Rohranschlusstücken 2, 3 entgegensetzt, grösser wird. Schliesslich kann die Verteilung der gehäuse- und halterungsseitigen Verbindungsstellen längs des Umfanges des Scheibenfederelementes 5 ungleichförmig sein, wodurch die Steifigkeit des Scheibenfederelementes 5 längs seines Umfanges unterschiedlich wird und ein Entkopplungselement mit richtungsabhängiger axialer und winkelmässiger Nachgiebigkeit erhalten werden kann.

Wenn erwünscht, können ferner im Bereich der axialen Enden des Gehäuses 4 Wegbegrenzer 11 vorgesehen sein, die mit ihren hakenförmigen Abschnitten das Scheibenfederelement 5 aussen umgreifen, um die axiale und winkelmässige Relativbewegung zwischen dem Gehäuse 4 und dem Scheibenfederelement 5 zu begrenzen und auf diese Weise eine Überlastung der Gelenkfederanordnung zu verhindern.

Bei der vorbeschriebenen Ausführungsform der Erfindung umfasst die Gelenkfederanordnung ein einzelnes ringförmiges Scheibenfederelement 5. Wenn erwünscht, können jedoch auch mehrere Scheibenfederelemente 5 hintereinander, z.B. in Gestalt eines Federpaketes, angeordnet sein, wodurch sich die Federsteifigkeit der Gelenkfederanordnung entsprechend verändern bzw. beeinflussen lässt. Eine derartige Anordnung hat gute schwingungsdämpfende Eigenschaft infolge Reibung zwischen den einzelnen Scheibenfederelementen 5.

Ferner lassen sich mehrere Scheibenfederelemente 5 oder Federpakete in Abstand voneinander konzentrisch hintereinander anordnen, indem zwischen den Scheibenfederelementen 5 bzw. den Federpaketen Distanzstücke vorgesehen werden, was eine entsprechende Vergrösserung des Federweges bewirkt. Das Scheibenfederelement 5 braucht ferner nicht notwendigerweise eine kreisförmige Konfiguration zu haben. Vielmehr kann es auch eine polygonale ringförmige Konfiguration haben oder gegebenenfalls aus einzelnen geradlinigen Abschnitten zu einer Ringform zusammengesetzt sein. Als Alternative könnte jedes Scheibenfederelement auch gewellt ausgebildet sein, um auf diese Weise einen Abstand zum benachbarten Scheibenfederelement zu schaffen.

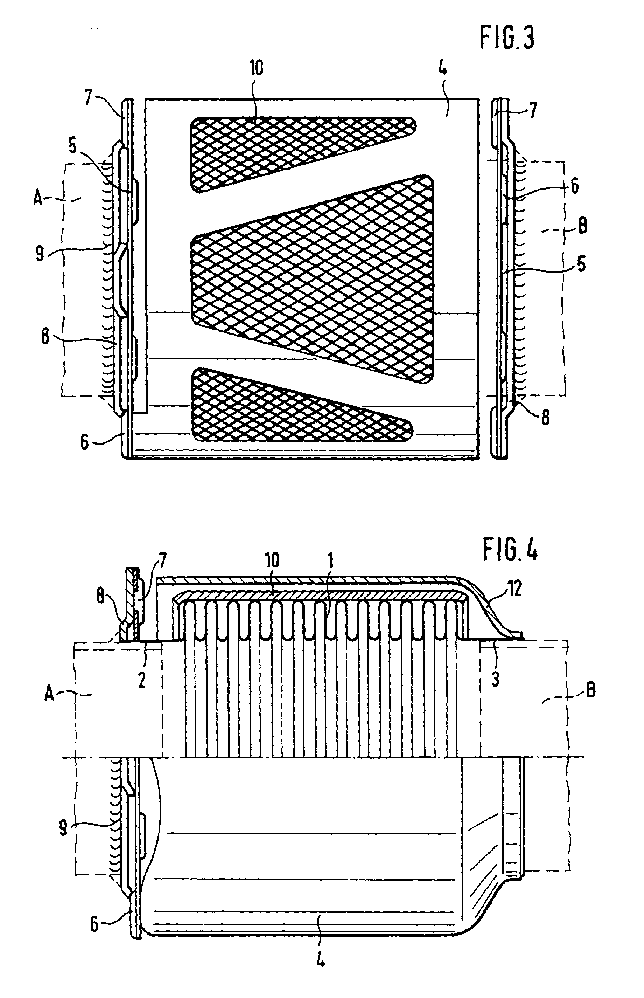

Fig. 3 zeigt eine weitere Ausführungsform der Erfindung, die sich von der vorbeschriebenen und in Fig. 1 und 2 gezeigten Ausführungsform im wesentlichen dadurch unterscheidet, dass das Gehäuse 4 zur Gewichtseinsparung mit einer Vielzahl umfänglich verteilt angeordneter Durchbrechungen versehen ist, an denen die Dämpfungseinlage 10 nach aussen hin freiliegt. Ausserdem sind die Wegbegrenzer weggelassen. Bezüglich des übrigen Aufbaues der Ausführungsform nach Fig. 3 kann auf die Beschreibung der ersten Ausführungsform verwiesen werden. Gleiche oder ähnlich Bauteile wie bei der ersten Ausführungsform tragen daher die gleichen Bezugszeichen.

Die dritte in Fig. 4 gezeigte Ausführungsform der Erfindung unterscheidet sich von der ersten Ausführungsform dadurch, dass das Gehäuse 4 nur im Bereich seines einen, nämlich vorzugsweise abstromseitigen axialen Endes durch eine Gelenkfederanordnung der vorbeschriebenen Art mit dem betreffenden Rohranschlusstück 2 verbunden ist, während es im Bereich seines anderen axialen Endes, wie bei 12 angedeutet ist, in Richtung auf das betreffende Rohranschlusstück 3 abgewinkelt und damit direkt verschweisst sein kann. Die dritte Ausführungsform der Erfindung schafft anders als die Ausführungsform mit beidseitiger Gelenkfederanordnung nur eine axiale und winkelmässige Nachgiebigkeit, jedoch keine radiale Versetzungsmöglichkeit der Mittellängsachsen der Rohranschlusstücke 2, 3. Im übrigen wird bezüglich des weiteren Aufbaus der dritten Ausführungsform auf die vorbeschriebenen Ausführungsformen verwiesen.

In Fig. 5 und 6 ist eine Ausführungsform der Erfindung mit einer Gelenkfederanordnung gezeigt, die anstelle eines ringförmigen Scheibenfederelementes ein ringförmiges Federelement 15 aus einem metallischen Drahtseilmaterial umfasst, welches das betreffende Rohranschlusstück 3 im Bereich des einen axialen Endes des Gehäuses 4 kontinuierlich umgibt und analog zu dem Scheibenfederelement der vorbeschriebenen Ausführungsformen mit dem Gehäuse 4 bzw. dem Rohranschlusstück 3 an umfänglich versetzt zueinander liegenden Stellen oder Bereichen 16, 17 verbunden ist. Die punktuelle Verbindung kann in Gestalt einer Schweissverbindung oder vorzugsweise mittels das Federelement 15 umgreifender Rohrfassungen erfolgen, die am Gehäuse 4 bzw. Rohranschlusstück 2 befestigt, z.B. angeschweisst sein können oder aus Abschnitten dieser Bauteile durch Umformung herausgebildet sind. Obschon eine andere geeignete Verteilung und Anzahl der Anbindungsstellen 16, 17 vorgesehen werden könnte, wird bevorzugt, dass je ein Paar gehäuse- und rohranschlusseitige Anbindungsstellen in diametral gegenüberliegender Beziehung vorgesehen ist.

Wie dargestellt, kann das ringförmige Drahtseil-Federelement 15 vollständig innerhalb der Umrisslinien des Gehäuses 4 aufgenommen und dadurch wirksam gegen äussere Einflüsse, wie Steinschlag, geschützt sein. Wenn erwünscht, können zwei oder mehrere ringförmige Drahtseil-Federelemente 15 hintereinander unter entsprechender Verstärkung der Federkennlinie vor gesehen sein.

Wie Fig. 5 zeigt, kann das Gehäuse 4, wie bei 19 angedeutet ist, eine radial in Richtung auf das abstromseitige Rohranschlusstück 2 abgebogene Verlängerung aufweisen, die den Raum zwischen dem Gehäuse 4 und dem Rohranschlusstück 2 mit der darin aufgenommenen Gelenkfederanordnung axial im wesentlichen nach aussen abschirmt. Gleichzeitig wird hierdurch eine wirksame Schallabschirmung und Wegbegrenzung geschaffen.

Ein rohrförmiges Hitzeschutzelement 20, das sich von dem aufstromseitigen Rohranschlusstück 3 koaxial zur Mittellängsachse des Entkopplungselementes über eine geeignete Wegstrecke längs der Länge des Rohrverbindungselementes 1 erstreckt hat die Aufgabe, eine Überhitzung des Rohrverbindungselementes 1 zu verhindern. Es versteht sich, dass ein derartiges Hitzeschutzelement 20, wenn erwünscht, auch weggelassen und auch den in Fig. 1-5 gezeigten Ausführungsformen der Erfindung mit Scheibenfeder-Gelenkanordnungen hinzugefügt werden kann.

Im übrigen kann bezüglich der übrigen Aufbauteile der Ausführungsformen der Erfindung nach Fig. 5 und 6 auf die Beschreibung der Scheibenfeder-Ausführungsformen nach Fig. 1-4 verwiesen werden. Obschon in Fig. 5 und 6 eine Gelenkfederanordnung auf Basis eines Drahtseil-Federelementes 15 nur im Bereich eines axialen Endes des Gehäuses 4 vorgesehen ist, könnte eine derartige Anordnung auch im Bereich beider axialer Enden des Gehäuses 4 vorgesehen sein.

Die Gelenkfederanordnungen sämtlicher vorbeschriebener Ausführungsformenen der Erfindung sind grundsätzlich torsionssteif. Sie werden daher vorzugsweise mit balgartig gewellten Verbindungselementen 1 verwendet, bei denen die Wellungen in einer radialen Ebene liegen, so dass das Verbindungselement 1 ebenfalls grundsätzlich torsionssteif ausgebildet ist. Die torsionssteife Ausgestaltung der Gelenkfederanordnungen bewirkt, dass das balgartige Verbindungselement 1 wirksam gegen Überlastung geschützt ist.

## Patentansprüche

1. Entkopplungselementfür Schwingungen in Rohrleitungen, insbesondere zum Einbau in Abgasanlagen von Brennkraftmaschinen, mit einem Paar axial beabstandeter, durch ein flexibles, insbesondere balgartiges, abdichtendes Verbindungselement (1) miteinander verbundener Rohranschlusstücke (2,3) und einer Kraftübertragungseinrichtung mit wenigstens axialer Nachgiebigkeit zur Übertragung von Kräften zwischen den Rohranschlusstücken, welche ein sich zwischen den Rohranschlusstücken längs des flexiblen Verbindungselementes erstreckendes Gehäuse (4) umfasst, das nahe wenigstens einem seiner axialen Enden durch eine wenigstens ein Ringfederelement(5,15) umfassende Gelenkfederanordnung mit dem betreffenden Rohranschlussstück verbunden ist, welches Ringfederelement (5,15) sich kontinuierlich umfänglich des Rohranschlusstükkes (2,3) erstreckt und an einer Vielzahl umfänglich beabstandeter Anbindungsbereiche (6,16) des Gehäuses (4) und einer Vielzahl umfänglich versetzt dazu vorgesehener umfänglich beabstandeter Anbindungsbereiche (7,17) des Rohranschlusstückes fixiert ist.

2. Entkopplungselement nach Anspruch 1, **dadurch gekennzeichnet, dass** das Ringfederelement ein ringförmiges Scheibenfederelement (5) ist.

3. Entkopplungselement nach Anspruch 2, **dadurch gekennzeichnet, dass** eine Vielzahl von Scheibenfederelementen (5) zu einem Federpaket zusammengefasst sind.

4. Entkopplungselement nach Anspruch 2 oder 3, **dadurch gekennzeichnet, dass** zwischen jedem Scheibenfederelement (5) und dem Rohranschlusstück (2,3) einerseits und dem Gehäuse (4) andererseits jeweils im wesentlichen punktförmige Anbindungsbereiche (6,7) vorgesehen sind.

5. Entkopplungselement nach Anspruch 4, **dadurch gekennzeichnet, dass** gehäuse- und rohranschlussstückseitig jeweils Zwei- oder Dreipunktverbindungen vorgesehen sind.

6. Entkopplungselement nach einem der vorhergehenden Ansprüche, **dadurch gekennzeichnet, dass** das Gehäuse (4) im wesentlichen zylindrisch und starr ausgebildet ist.

7. Entkopplungselement nach Anspruch 1, **dadurch gekennzeichnet, dass** das Gehäuse (4) einerendseitig starr mit dem betreffenden Rohranschlusstück (2,3) verbunden ist.

8. Entkopplungselement nach einem der Ansprüche 1 bis 6, **dadurch gekennzeichnet, dass** das Gehäuse beiderendseitig über je eine Gelenkfederanordnung mit den Rohranschlusstücken (2,3) verbunden ist.

9. Entkopplungselement nach einem der vorhergehenden Ansprüche, **dadurch gekennzeichnet, dass** die axiale und/oder winkelmässige Relativbeweglichkeit zwischen dem betreffenden Rohranschlusstück (2,3) und dem Gehäuse (4) anschlagbegrenzt ist.

10. Entkopplungselement nach Anspruch 1, **dadurch gekennzeichnet, dass** das Ringfederelement ein umfänglich des Rohranschlusstückes (2,3) sich erstreckendes kontinuierliches Element (15) aus einem Drahtseilmaterial ist.

11. Entkopplungselement nach Anspruch 10, **dadurch gekennzeichnet, dass** die das Drahtseil-Ringfederelement (15) umfassende Gelenkfederanordnung innerhalb des Gehäuses (4) aufgenommen ist.

12. Entkopplungselement nach Anspruch 11, **dadurch gekennzeichnet, dass** die das Drahtseil-Ringfederelement (15) umfassende Gelenkfederanordnung durch einen radialen Bereich (19) des Gehäuses (4) nach aussen im wesentlichen abgeschirmt ist.

13. Entkopplungselement nach einem der vorhergehenden Ansprüche, **dadurch gekennzeichnet, dass** am aufstromseitigen Rohranschlusstücke ein in das flexible, balgartige Verbindungselement (1) hineinragendes rohrförmiges Wärmeschutzelement (20) montiert ist.

## Claims

1. A conduit vibration decoupling device, particularly for installation in exhaust conduit systems of internal combustion engines, including a pair of axially spaced conduit connector members (2,3) connected with each other by a flexible bellows-type sealing conduit element (1), and a force transfer means having at least axial pliancy for transferring forces between the conduit connector members, said force transfer means comprising a housing (4) extending between the conduit connector members along the flexible conduit element and connected near at least one of its axial ends to the associated one of said conduit connector members by an articulated spring assembly comprising at least one annular spring element (5,15), said annular spring element (5,15) extending continuously around the periphery of said conduit connector member (2,3) and being mounted at a plurality of peripherally spaced mounting portions (6,16) to said housing (4) and at another plurality of peripherally spaced mounting portions (7,17) to said conduit connector member, said mounting portions of the conduit connector member being peripherally offset with respect to said mounting portions of the housing.

2. The decoupling device as set forth in claim 1, wherein said annular spring element is a disk-shaped annular spring element (5).

3. The decoupling device as set forth in claim 2, wherein a plurality of disk-shaped spring elements (5) is assembled into a spring pack.

4. The decoupling device as set forth in claim 2 or 3, wherein each of the mounting portions (6,7) provided between said disk-shaped spring element (5) and said conduit connector member (2,3), or said housing (4), respectively, having an essentially point-like shape.

5. The decoupling device as set forth in claim 4, wherein two or three mounting portions are provided each between the disk-shaped spring element and the conduit connector member, or the housing, respectively.

6. The decoupling device as set forth in any one of the precoding claims, wherein said housing (4) has a substantially cylindrical shape and a rigid structure.

7. The decoupling device as set forth in claim 1, wherein said housing (4) is connected at one of its axial ends to the associled one of the conduit connector members (2,3) in a rigid manner.

8. The decoupling device as set forth in any one of the claims 1 to 6, wherein said housing is connected at both of its axial ends by an articulated spring assembly to the conduit connector members (2,3).

9. The decoupling device as set forth in any one of the preceding claims, wherein the axial and/or angular relative mobility between the housing (4) and the conduit connector member (2,3) being stop-limited.

10. The decoupling device as set forth in claim 1, wherein said annular spring element is a continuous element (15) made of metallic cable material and extending circumferentially around the conduit connector member (2,3).

11. The decoupling device as set forth in claim 10, wherein the articulated spring assembly comprising said metallic cable annular spring element (15) is accommodated within said housing (4).

12. The decoupling device as set forth in claim 11, wherein the articulated spring assembly comprising said metallic cable annular spring element (15) is screened off substantially from the outside by a radial portion (19) of said housing (4).

13. The decoupling device as set forth in any one of the preceding claims, wherein a tubular heat shield element (20) is mounted to the upstream one of the conduit connector members, said heat shield element extending into say flexible, bellows-type conduit element (1).

## Revendications

1. Dispositif de découplage pour les oscillations dans des conduits, en particulier destinés au montage dans des installations d'échappement de moteurs à combustion interne comprenant une paire de pièces de raccord de conduit (2, 3) espacées axialement, reliées entre elles par un élément de liaison (1) flexible, en particulier du type soufflet, étanche, et un moyen de transmission de force présentant au moins une souplesse axiale pour la transmission de forces entre les pièces de raccord de conduit, lequel moyen de transmission de force comprend un boîtier (4) s'étendant le long de l'élément de liaison flexible entre les pièces de raccord de conduit, lequel boîtier est relié à proximfté d'au moins une de ses extrémités axiales à la pièce de raccord de conduit concernée par un arrangement élastique articulé comprenant au moins un annulaire élément élastique (5, 15) qui s'étend de façon continue tout autour de la pièce de raccord de conduit (2, 3) et est fixé en une pluralité de zones de liaison (6, 16) du boîtier (4) espacées périphériquement et en une pluralité de zones de liaison (7, 17) de la pièce de raccord de conduit espacées périphériquement prévues décalées par rapport aux premières zones de liaison.

2. Dispositif de découplage selon la revendication 1, **caractérisé en ce que** l'élément annulaire élastique est un élément de rondelle élastique annulaire (5).

3. Dispositif de découplage selon la revendication 2,
**caractérisé en ce qu'**une pluralité d'éléments de rondelle élastique (5) sont réunis en un bloc ressort.

4. Dispositif de découplage selon la revendication 2 ou 3, **caractérisé en ce qu'**entre chaque élément de rondelle élastique (5) et la pièce de raccord de conduit (2, 3) d'une part et le boîtier (4) d'autre part des zones de liaison (6, 7) sensiblement ponctuelles sont respectivement prévues.

5. Dispositif de découplage selon la revendication 4, **caractérisé en ce que** des liaisons à deux ou à trois points sont respectivement prévues côté bottier et côté pièce de raccord de conduit.

6. Dispositif de découplage selon l'une quelconque des revendications précédentes, **caractérisé en ce que** le boîtier (4) est principalement cylindrique et rigide.

7. Dispositif de découplage selon la revendication 1, **caractérisé en ce que** le boîtier (4) est relié du côté d'une extrémité de façon rigide avec la pièce de raccord de conduit (2, 3) concernée.

8. Dispositif de découplage selon l'une quelconque des revendications 1 à 6, **caractérisé en ce que** le boîtier (4) est relié des côtés des deux extrémités à chaque fois par un arrangement élastique articulé aux pièces de raccord de conduit (2, 3).

9. Dispositif de découplage selon l'une quelconque des revendications précédentes, **caractérisé en ce que** la mobilité rotative axiale et /ou angulaire entre la pièce de raccord de conduit (2, 3) concernée et le boîtier (4) est limités par butée.

10. Dispositif de découplage selon la revendication 1, **caractérisé en ce que** l'élément annulaire élastique est un élément (15) s'étendant de façon continue périphériquement autour de la pièce de raccord de conduit (2, 3) en un matériau de câble métallique.

11. Dispositif de découplage selon la revendication 10, **caractérisé en ce que** le dispositif élastique articulé comprenant l'élement annulaire élastique - matériau de câble métallique (15) est logé à l'intérieur du boîtier (4).

12. Dispositif de découplage selon la revendication 11, **caractérisé en ce que** l'arrangement élastique articulé comprenant l'élément annulaire élastique - matériau de câble métallique (15) est principalement abrité vers l'extérieur par une zone radiale (19) du boîtier (4).

13. Dispositif de découplage selon l'une quelconque des revendications précédentes, **caractérisé en ce qu'**un élément de protection contre la chaleur (20) tubulaire pénétrant dans l'élément de liaison (1) flexible, du type soufflet est monté sur la pièce de raccord de conduit du côté du courant ascendant.
